# EUROPEAN PATENT APPLICATION

(11) **EP 4 538 087 A1**
(43) Date of publication of application: **16.04.2025**
(21) Application number: 24205172.0
(22) Date of filing: 08.10.2024
(51) Int. Cl.: B60K 17/04, F16H 3/54, F16H 63/30

(54) **WHEEL HUB FOR AXLE OF A VEHICLE COMPRISING AN IMPROVED INTEGRATED REDUCTION SYSTEM**

(30) Priority: 12.10.2023 IT 202300021297
(71) Applicant: IVECO S.P.A., 10156 Torino (IT)
(72) Inventor: PEREIRA DE LEMOS, Josè Francivaldo, 10156 TORINO (IT)
(74) Representative: Studio Torta S.p.A.

(57) **Abstract**

Wheel hub (10) for an axle (4) of a vehicle (1) comprising a reduction unit (15), which is housed inside a chamber (13) defined between the wheel hub (10) and a housing (5) of the axle (4) and is configured to vary the torque transmitted from an axle shaft (7a, 7b) of the axle (4) to a respective wheel hub (10), the reduction unit (15) comprising a gearing (16), which is configured to define several transmission ratios depending on the position of an actuator system (30) configured to move the axle shaft (7a-7b) along an axis (B) thereof.

## Description

### CROSS-REFERENCE TO RELATED APPLICATIONS

This patent application claims priority from Italian patent application no. 102023000021297 filed on October 12, 2023, the entire disclosure of which is incorporated herein by reference.

### TECHNICAL FIELD

The invention relates to a wheel hub for an axle of a vehicle, in particular a wheel hub for an axle of a heavy vehicle comprising a reduction system integrated in the hub.

### KNOWN STATE OF THE ART

As it is known, in a wheel vehicle provided with at least one internal combustion engine, reducing the torque coming from the drive shaft relative to the axles of the vehicle is essential.

As it is further known, vehicles are normally provided with a differential assembly, which is configured to differentiate the torque coming from the drive shaft between a pair of axle shafts of the axle, due to known reasons of dynamics while driving the vehicle.

The aforementioned torque reduction is normally carried out by means of known gearbox devices located between the drive shaft and the aforesaid differential assembly.

However, in case of heavy vehicles, these reduction gears are insufficient, in terms of number, to be able to provide a suitable reduction ratio between the torque of the drive shaft and the torque delivered to the wheels of the axle in the different load conditions.

Indeed, it is clear that a heavy vehicle, such as a truck, has to bear a significant weight difference between the unloaded condition and the maximum load condition and, hence, the highest gears are not necessarily the most suited ones for the unloaded condition of the vehicle.

To this aim, reduction systems are known, which are integrated in the wheel hubs. However, these systems require further improvements in order to increase their efficiency.

Furthermore, known reduction systems do not allow the gears contained therein to be engaged while the vehicle is running, which means that the vehicle needs to be stopped, with a consequent increase in unproductive times.

The needs discussed above are all the more felt in the case of partially or totally electrified vehicles.

Therefore, there is a strong need for a reduction system for an axle of a vehicle, which can solve the problems discussed above.

The object of the invention is to fulfil the aforementioned needs in an optimized and economic fashion.

### SUMMARY OF THE INVENTION

The aforesaid object is reached by a wheel hub for an axle provided with an integrated reduction system and by a vehicle as claimed in the appended claims, which are an integral part of the description.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic cross-section view from the top of a vehicle provided with wheel hubs according to the invention;
- Figure 2 is a schematic cross-section view of an axle provided with wheel hubs according to the invention;
- Figures 3 and 4 are cross-section views of a vehicle hub according to the invention in different operating stages; and
- Figure 5 is a schematic view of a control system for the vehicle hub according to the invention.

### DETAILED DESCRIPTION OF THE INVENTION

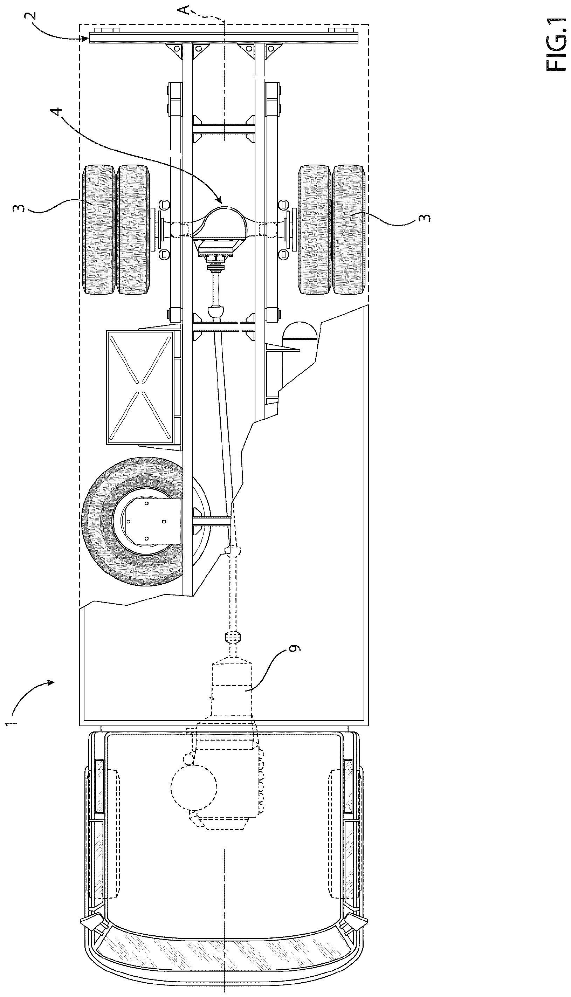

Figure 1 shows a commercial or heavy vehicle 1 comprising a frame 2 extending along a longitudinal axis A and capable of moving by means of wheels 3 carried by an axle 4.

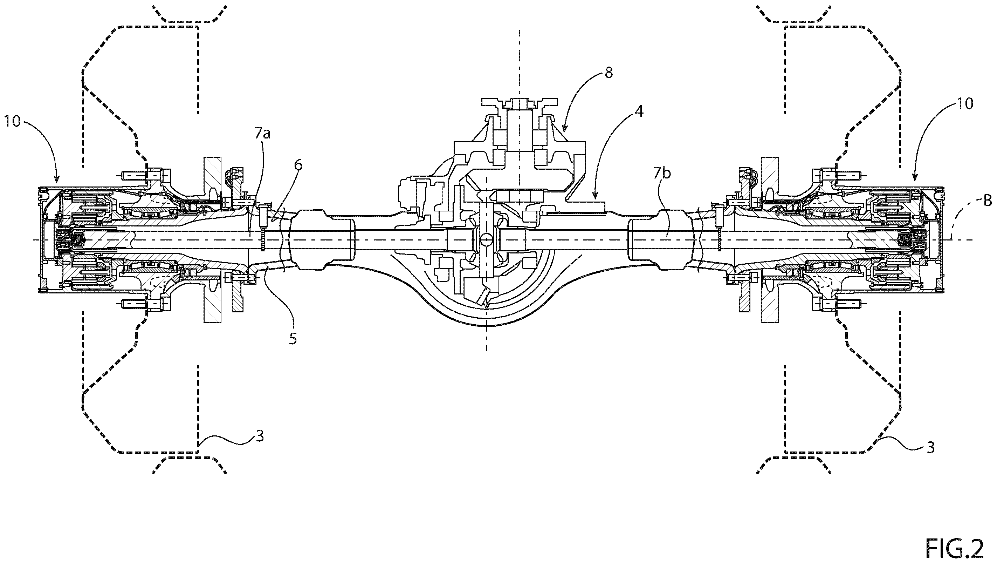

A shown in figure 2, the axle 4 comprises a housing 5 defining a space 6 designed to at least partially accommodate a pair of axle shafts 7a, 7b extending along an B, which is transverse relative to the longitudinal axis A of the vehicle 1.

In particular, the axle shafts 7a, 7b are operatively connected, at an end of theirs, to a transmission 8 of the vehicle 1 and, on the opposite side, to respective wheel hubs 10. In the example shown herein, the transmission 8 shows a bevel gear, but it clearly could be any type of torque transmission device, such as a differential, operatively connected to a torque source 9, such as a powertrain, for example an internal combustion engine.

In particular, the wheel hubs 10 are carried by the housing 5 so that they can freely rotate and are each configured to cooperate with the respective end portion of the axle shafts 7a, 7b, as described more in detail below.

As to the wheel hubs 10, for the sake of simplicity, reference will be made to only one of them, for example the right one, and the items of information provided below also apply - in the same way - to the left wheel hub, the structure described below obviously being mirror-like relative to a longitudinal axis A of the vehicle 1.

The wheel hub 10, as mentioned above, is supported in such a way that it can freely rotate relative to the housing 5, in particular it is hollow and coaxial to the transverse axis B. In the example described herein, the wheel hub 6 is supported by means of support means 11, such as a pair of bevel bearings, and by means of sealing means, such as O-rings.

In particular, the hub 10 comprises a main portion 10a with a substantially cylindrical shape, which is carried by the housing 2, and an annular portion 10b, which is housed at an end portion of the housing 5 and is carried by the main portion 10a.

Advantageously, the main portion 10a and the annular portion 10b are coupled by means of known threaded means and, optionally, with the aid of further intermediate parts, which are not described in detail herein for they depend on the assembly, which is due to the type and weight of the vehicle.

The cylindrical portion 10a defines, together with the end part of the housing 5, a chamber 13, which is axially delimited - along the axis B - by an axial wall 6c of the main portion 10a and, on the other side, by the end part of the housing 5; said chamber 13 is radially delimited, around the axis B, by the inner surface of the main portion 10a of the wheel hub 10.

The wheel hub 10 is operatively connected to the axle 4 by means of a reduction unit 15, which is housed inside the chamber 13 and is configured to connect the wheel hub 10 to the axle shaft 7b with two different transmission ratios, namely so that the speed/torque delivered to the axle shaft 7b is different from the speed/torque delivered to the wheel hub 10 according to two different gear ratios.

In particular, the reduction unit 15 comprises a gearing 16 configured to cooperate with a toothing 17 carried by the axle shaft 7b between a first or a second operating position, characterized so as to define different transmission ratios between the axle shaft 7b and the wheel hub 10, as described below.

In particular, the gearing 16 is an epicyclic gearing comprising a plurality of satellites 18, which are each carried by a pin 19 integral to a train carrier 21 and are configured to mesh with a crown 22 integral to the housing 5.

In particular, the train carrier 21 is rigidly carried by the hub 10, in detail it is rigidly fixed to the cylindrical portion 10a and has an annular shape extending radially from the cylindrical portion 10a towards the space 13, facing the wall 10c.

The crown 22 is fixed to a projecting portion 22' integral to the housing 5 and is advantageously shaped like a bell open towards the chamber 13, so that it faces the axial wall 10c. The portion 22 is configured to accommodate, on the inside, the satellites 18. In particular, the portion 22 defines a toothing configured to mesh with the satellites 18, as it is known.

The aforementioned toothing 17 is configured to selectively cooperate with one of the satellites 18 or with a toothing 24 integral to the train carrier 21 and is advantageously carried by a sleeve 31 sliding on the axle shaft 7b, as described below.

In particular, the plurality of satellites 18 cooperate with the toothing 17 by means of a toothed wheel 25 operatively interposed between the satellites 18" and the toothing 17, which hence acts as a solar gear for the gearing 16.

Advantageously, the sleeve 31 is moved along the axis B so as to move the toothing 17 by means of an actuation system 30 operatively interposed between the wheel hub 10, in particular the axial wall 10c, and the axle shaft 7b.

In particular, the actuation system 30 comprises a sleeve 31 carried so as to freely translate along the axis B, but linearly integral to the axle shaft 7b, for example by means of a grooved coupling, and an actuator 32 carried so as to freely rotate relative to the sleeve 31 and caused to rotate by the wheel hub 10.

In particular, the actuator 32 comprises a piston portion 33 housed in a chamber 34 separate from the chamber 13 and delimited by a containing structure 35 and is configured to slide, in a sealed manner, in the chamber 34, dividing it into a first and a second portion 34', 34", which are fluidly separate from one another.

The actuator 32 further comprises a support portion 36 extending radially along the axis B from the piston portion 33 and defining a seat for rolling means 37 operatively interposed between the support portion 36 and the sleeve 31.

The rolling support means 37 advantageously comprise at least a pair of tapered roller bearings.

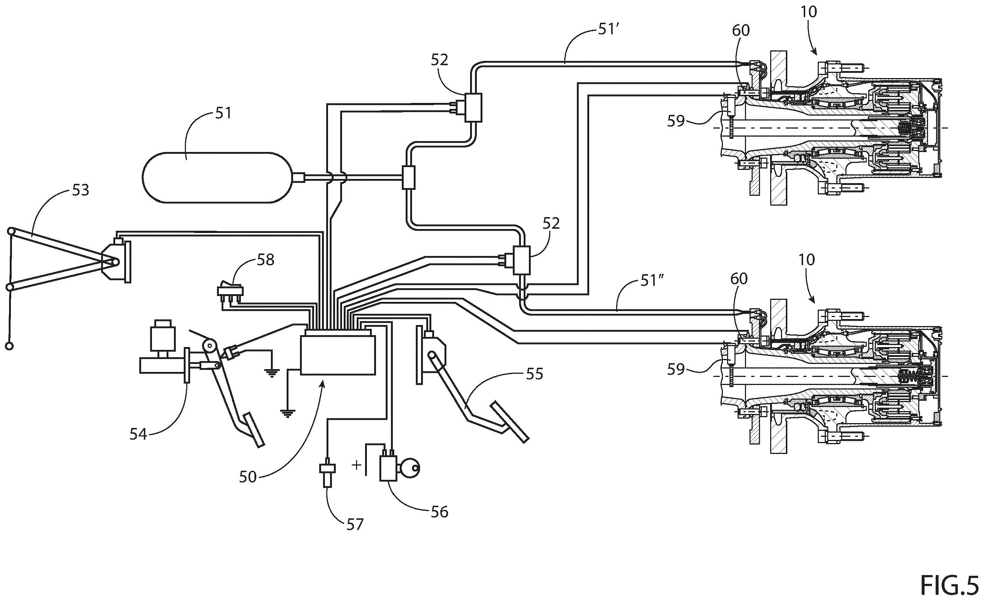

Furthermore, the portions 34', 34" are also connected to a source of pressurized fluid 51, such as compressed air, of the vehicle 1 (figure 5) so as to be selectively pressurized or brought to ambient pressure.

In particular, the first portion 34' is fluidly connected to a first duct 51' and the second portion 34" is connected to a second duct 51", both capable of being fluidly connected to the source of pressurized fluid.

The first and the second duct 51', 51" allow the fluid source 51 and the chamber 34 to be fluidly connected thanks to a plurality of rotating fluid connection joints not described herein for the sake of brevity, but schematically shown in the attached drawings.

The actuation system 30 further comprises elastic means 40 operatively interposed between the actuator 32 and the axle shaft 7b, in particular at an axial end thereof. In detail, the elastic means 40 cooperate in contact with the actuator 32, enabling a relative sliding upon rotation relative to the latter, for example through a bushing or equivalent rotating support elements.

The elastic means 40 advantageously comprise a spiral spring 41, such as a helical spiral spring, interposed in contact between the axle shaft 7b and the actuator 32, in particular the support portion 36 thereof.

Preferably, the end portion of the axle shaft 7b defines a seat 42 designed to house at least part of the spring 41 so as to prevent it from buckling and therefore serving as anti-buckling device.

Advantageously, said seat 42 is obtained by means of a cylindrical annular protuberance extending from the end portion of the axle shaft 7b and surrounding part of the spring 41.

Advantageously, the vehicle 1 further comprises an electronic control unit 50 and a plurality of sensors designed to detect quantities relating to different operating parameters of the vehicle, the control unit 50 comprises processing means electronically connected to the sensors means in order to acquire data detected by them and control, as a result, the passage of pressurized fluid between the first or second portion 34', 34'' of the chamber 34.

In particular, the sensors can be connected to the control unit 50 through a wire or in an electromagnetic manner and the control unit 50 is configured to control valve means 52, which are advantageously interposed along the respective ducts 51', 51'' and are configured to allow pressurized fluid to flow from source 51 to the chamber 34 or to prevent it from doing so.

Said valve means 52 can be, for example, solenoid valves.

In particular, the electronic unit 50 contains stored data concerning the control of the actuation system 30 and of the valve means 52.

The vehicle 1 can further comprise control means (not shown) configured to change the data stored in the control unit 50 so as to change the actuation condition of the actuation system 30 and of the valve means 52.

The sensor means preferably comprise at least some of the following sensor means:
- A load sensor 53 configured to detect the load of a suspension connecting the axle 4 to the frame 2, for example a load cell;
- A clutch sensor 54 configured to detect the opening of a control clutch of the transmission 8, for example a position sensor connected to the clutch pedal;
- An accelerator sensor 55 configured to detect the acceleration of the vehicle 1, for example a position sensor connected to the accelerator pedal;
- An ignition sensor 56 configured to detect the ignition of the vehicle 1, for example a movement sensor of the key ignition system;
- A speed sensor 57 configured to detect a rotation speed of the output shaft of the powertrain 9, for example a phonic wheel;
- A control sensor 58 configured to detect the activation of the possibility of varying the ratio of the wheel hub, for example a button or an icon on a display;
- A speed sensor 59 configured to detect a rotation speed of the axle 4, hence of the axle shafts 7a, 7b, such as a phonic wheel or an encoder; and
- A speed sensor 60 configured to detect a speed of the wheel hub 10, such as an ABS sensor of the phonic wheel of encoder kind.

The operation of the wheel hub according to the invention described above is the following.

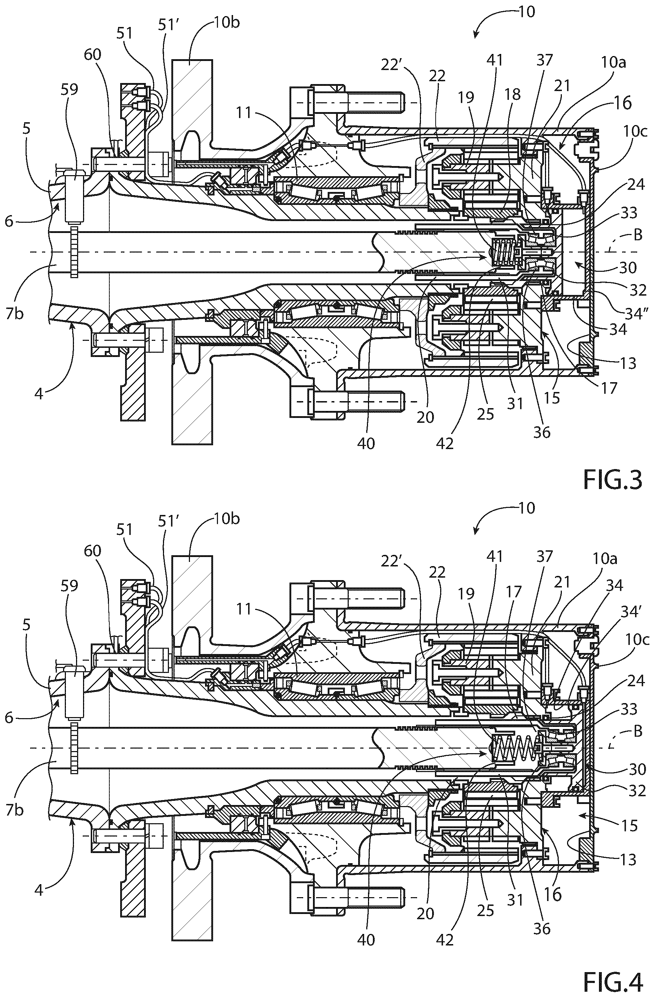

In a first operating condition (figure 3), the pressurized fluid is controlled so as to increase the pressure in the second portion 34" of the chamber 34 acting against the thrust of the spring 41, which gets compressed, pushed by the piston element 33. Consequently, the sleeve 31 is pushed towards the axle shaft 7b and, therefore, the toothing 17 meshes with the sun gear 25, which causes the rotation of the satellites 18, which, by means of the pins 29, cause the rotation of the train carrier 21 and, hence, of the wheel hub 10.

In a second operating condition (figure 4), the pressurized fluid is controlled so as to increase the pressure in the first portion 34' of the chamber 34 acting in parallel to the thrust of the spring 41, which expands, accordingly pushing the piston element 33 away from the axle 7b. Consequently, the sleeve 31 is moved away from the axle shaft 7b and, therefore, the toothing 17 meshes with the toothing 24 integral to the train carrier 21, which drags the wheel hub 10.

In the second operating condition, the speed of the wheel hub 10 clearly is higher, for it is the same as the one of axle shaft 7b and, hence, is suited for conditions of lower levels of torque to be transmitted compared to the first operating condition.

According to the description above, the invention also relates to a method for controlling a wheel hub 10 provided with a reduction unit 15 of the type described above.

Said method basically comprises the following steps of:
- Detecting a plurality of physical quantities relating to operating parameters of the vehicle 1;
- Processing these detected physical quantities in order to identify a vehicle load condition;
- Checking whether the vehicle load condition complies with the reduction ratio of the wheel hub 10;
- If it complies, said ratio is maintained, otherwise the actuation system is controlled to switch to a different reduction ratio.

In particular, the control of the actuation system 30 comprises sending a control signal to the valve means 52.

In particular, the method described above can be stored and processed in the control unit 50 described above and the detected physical quantities can be some of the quantities detected by the sensor means 53-60.

The check concerning the vehicle load condition can be carried out through a check of the detected quantities relative to physical quantities stored in the control unit 50, for example by means of lookup tables (LUT) deriving from specific experimental tests for the special type of vehicle.

Otherwise, the aforesaid check can be carried out by means of a comparison relative to a value deriving from mathematical interpolation among said physical quantities.

Owing to the above, the advantages of a wheel hub for an axle of a vehicle comprising an integrated reduction system according to the invention are evident.

Thanks to this system, a reduction system is provided, which is integrated in a wheel hub, is versatile, compact and economic as well as easy to be mounted and subjected to maintenance compared to known systems.

Thanks to the additional reduction system and to the two transmission ratios that can be chosen depending on the type and size of the vehicle, fuel consumptions as well as pollutant emissions can be reduced.

In particular, the use of a gearing integrated in the wheel hub allows manufacturers to obtain high transmission ratios through a sturdy gear, which is suited for the large loads of an axle of a heavy vehicle.

In particular, the actuation system disclosed herein is particularly versatile, easy to be subjected to maintenance and replaced.

Furthermore, the presence of two ducts, which selectively inject air into two portions of the chamber of the actuator means, activates the reduction ratio switch in a quicker and more controlled manner. In particular, said switch can be controlled during the movement of the vehicle.

Indeed, thanks to the control method described herein, the switch can take place in the reduction unit 15 when the vehicle is moving.

The control can be automated and stored in the electronic unit and the control variables can previously be stored or can be changed by the driver.

Finally, the wheel hub for an axle of a vehicle comprising an integrated reduction system according to the invention can be subjected to changes and variants, which, though, do not go beyond the scope of protection set forth in the appended claims.

Obviously, as mentioned above, the housing 4 and the wheel hub 10 can have different shapes and consist of more and different pieces.

In addition, the toothed wheels described above could change and there could be elements that are not described herein, but are known when dealing with the assembly of an axle according to the invention.

Clearly, the description above relates to an air actuation, which is deemed to be the most effective and economic one, however the use of equivalent actuator means should not be excluded, said equivalent actuator means being, for example, electromagnetic, mechanical or fluid actuator means, which are configured to move the sleeve 31 instead of the air pressing force described herein.

Furthermore, the method disclosed herein could comprise different ways to check for the condition of engagement of the gears between wheel hub and axle shafts, as mentioned above, through checks of limit values deriving from mathematical interpolations or table relationships.

## Claims

1. Wheel hub (10) for an axle (4) of a vehicle (1) comprising:
- a hollow portion (10a) carried in a rotationally free manner on a housing (5) of said axle (4) around an axis (B) of the latter, said portion (10a) defining a chamber (13) between a its internal wall and said housing (5),
- a reduction unit (15) housed inside said chamber (13) and configured to vary the torque transmitted by a drive shaft (7a, 7b) of said axle (4) and said wheel hub (10), said reduction unit ( 15) including a gear train (16),
said gearing (16) including:
a geartrain (21) integral with said portion (10a) and defining a toothing (24);
a plurality of satellites (18) carried by respective pins (19) integral with said train carrier (21);
a crown (22) integral with said casing (5) and a sun gear (25) carried rotationally free by said casing (5), said satellites (18) meshing between said sun gear (25) and said crown (22),
- an actuation system (30) comprising a sleeve (31) mounted integral with the rotation and free to move along said axis (B) around said drive shaft (7a, 7b), said sleeve (31) including toothing (17),
said toothing (17) being configured to cooperate selectively with said toothing (24) of said gear carrier (21) or said sun gear (25) depending on the position of said sleeve (31) on said drive shaft (7a, 7b) along said axis (B), thus defining different transmission ratios between said drive shaft (7a, 7b) and said wheel hub (10).

2. Wheel hub according to claim 1, in which said crown (22) houses inside said second plurality of satellites (18).

3. Wheel hub according to one of the previous claims in which said actuation system (30) comprises an actuator (32) comprising a movable fluid-tight piston portion (33) inside a chamber (34) integral with said wheel hub (10) and defining a first portion (34') and a second portion (34''), each of said portions (34', 34") being fluidly connected via respective ducts (51', 31'') to a source (51) of pressurized fluid, said actuator (32) cooperating in contact with said sleeve (31).

4. Wheel hub according to claim 3, wherein said actuator (32) includes a support portion (36) extending from said piston portion (33) and supporting said sleeve (31) in free rotation thereon.

5. Wheel hub according to claim 4, wherein said actuation system (30) includes rolling support means operatively interposed between said sleeve (31) and said support portion (36).

6. Wheel hub according to claim 5, wherein said rolling support means comprise axial roller bearings.

7. Wheel hub according to one of claims 3 to 6, comprising elastic means (40) operationally interposed between said actuator (32) and said drive shaft (7a, 7b).

8. Wheel hub according to claim 7, wherein said elastic means (40) comprise a helical spring (41) interposed between one end of said drive shaft (7a, 7b) and said support portion (36).

9. Wheel hub according to claim 7 or 8, wherein said drive shaft (7a, 7b) defines a seat (42) configured to house part of said elastic means (40) to prevent them from buckling.

10. Axle (4) for vehicle including:
- a housing (5) defining a space (6) along an axis (B);
- a pair of axle shafts (7a, 7b) housed at least partially in said space (6) and including respective internal ends (7b'') cooperating with a transmission (8) of said vehicle (1) configured to provide a driving torque to said drive shafts (7a, 7b);
- respective wheel hubs (10) according to one of the previous claims and carried in a rotationally free manner by said casing (5).

11. Vehicle (1) comprising a chassis (2), a powertrain (9), a transmission (8) and at least one axle (4) according to claim 10.

12. Vehicle according to claim 11, comprising a source of pressurized fluid (51) fluidly connected via at least one duct (51', 51'') to said actuation system (30) and valve means (52) fluidly interposed on said at least one duct (51', 51") to regulate the passage of fluid under pressure.

13. Vehicle according to claim 12, comprising a control unit (50) and a plurality of sensor means (53-60) configured to detect physical quantities relating to operational conditions of said vehicle (1), said control unit (50 ) comprising processing means electrically connected to said sensor means (53-60) to acquire the data detected by them, process them and consequently control said valve means (52) based on data relating to said operational conditions stored in said processing means.

14. Vehicle according to claim 13, comprising control means configured to vary the data stored in said electronic unit (50) relating to said operating quantities.

15. Vehicle according to claim 13 or 14, comprising at least some of the following sensor means (53-60):
• A load sensor (53) configured to detect the load of a suspension connecting said axle (4) to said frame;
• A clutch sensor (54) configured to detect the opening of a control clutch of said transmission (8);
• An accelerator sensor (55) configured to detect the acceleration of said vehicle (1);
• An ignition sensor (56) configured to detect the ignition of said vehicle (1);
• A speed sensor (57) configured to detect a rotation speed of an output shaft of said powertrain (9);
• A control sensor (58) configured to detect the activation of the possibility of varying the ratio of said wheel hub (10)
• A speed sensor (59) configured to detect the speed of said drive shafts (7a, 7b); And
• A speed sensor (60), configured to detect a speed of said wheel hub (10).

16. Method for checking a wheel hub (10) in a vehicle according to claim 15, comprising the following steps:
• Detect a plurality of physical quantities relating to the operating parameters of said vehicle (1);
• Process these physical quantities detected to identify a vehicle load condition;
• Check whether the vehicle load condition complies with the reduction ratio of said wheel hub (10);
• If it complies, said ratio is maintained, otherwise said actuation system (30) is controlled to switch to a different reduction ratio.

17. A method according to claim 16, wherein said control of said actuation system (30) comprises sending a signal to control said valve means (52).
